# EUROPEAN PATENT APPLICATION

(11) **EP 0 967 447 A1**
(43) Date of publication of application: **29.12.1999**
(21) Application number: 99201591.7
(22) Date of filing: 20.05.1999
(51) Int. Cl.: F25B 30/06

(54) **Heat pump system**

(30) Priority: 20.05.1998 NL 1009233; 29.10.1998 NL 1010425
(71) Applicant: Itho B.V., 3115 HB Schiedam (NL)
(72) Inventor: Van den Bogerd, Willem Theodoor, 2984 EH Ridderkerk (NL)
(74) Representative: Ottevangers, Sietse Ulbe

(57) **Abstract**

A heat pump system is provided with a hot-water boiler (1), a closed cooling system (2), a floor coil (12) and a ground coil (9). The closed cooling system consists of an evaporator (6) designed as heat exchanger, a compressor (3), a condenser (4) designed as heat exchanger, and an expansion valve (5), the condenser (4) being accommodated in the boiler (1). Both the floor coil (12) and the ground coil (9) are connectable, by means of controllable multiple-way valves, to the evaporator (6), the condenser (4) and to each other, while the controllable multiple-way valves are designed as a single, multiple shut-off valve (8) provided with separate chambers (39-42).

## Description

The invention relates to a heat pump system, provided with a hot-water boiler, a closed cooling system comprising an evaporator designed as heat exchanger, a compressor, a condenser designed as heat exchanger and an expansion valve, the condenser being accommodated in the boiler, and with a floor coil and a ground coil, both the floor coil and the ground coil being connectable, by means of controllable multiple-way valves, to the evaporator, the condenser and to each other.

Such heat pump system is known from practice. The mutual connections during the different operating modes of the system are obtained by means of a series of controllable three-way valves, which each have to be controlled separately and in the proper order for bringing the system from one operating mode into the other. The series of three-way valves and the associated control system therefor render the known heat pump system expensive and complex, as a consequence of which this system is used on a highly limited scale only, in spite of the known advantages of an energetic nature that can thereby be obtained.

The object of the invention is to give the known heat pump system a considerably simpler and cheaper construction so as to render it suitable for large-scale use.

In accordance with the invention, this object is realized by designing the controllable multiple-way valves as a single, multiple shut-off valve having separate chambers.

This multiple shut-off valve can comprise a cylindrical housing having its outer surface provided with a series of ports for connecting thereto the water-carrying pipes of the heat pump system, and having a rotor arranged within said housing, consisting of a central shaft, a series of circular, spaced-apart partitions fixedly mounted on the central shaft and bounding separate chambers, which partitions sealingly abut against the inner wall of the cylindrical housing, and hourglass-shaped shut-off bodies arranged between each pair of adjacent partitions, of which shut-off bodies the radial end walls sealingly abut against the inner wall of the cylindrical housing and the sidewalls sealingly abut against the adjacent partitions.

However, because in this multiple shut-off valve the partitions and the hourglass-shaped shut-off bodies mounted thereon are extremely difficult to seal for a longer period relative to the inner wall of the cylindrical housing, which causes leakage flows that at least partially short-circuit the different water-carrying circuits in an undesired manner, it is more favorable when the water-carrying pipes of the heat pump system are connected to ports in two stationary, axial end covers thereof, while between these end covers a valve body is present that is rotatable about its center line and that is provided with one-sidedly open, chamber-shaped recesses that are sealed relative to the relevant end cover, the open side of said recesses lying in an axial end face of the rotatable valve body and the form thereof being such that two adjacent ports are interconnectable via a chamber-shaped recess.

In this second embodiment, the multiple shut-off valve has the major advantage that the end faces to be sealed, rotatable relative to each other, are of flat design and can be sealingly pressed against each other with the interposition of O-rings provided along the circumference of the chamber-shaped recesses. Such sealing has a long service life and can moreover be readily periodically replaced. Further, the shut-off valve is considerably simpler to produce than the shut-off valve according to the above-described first embodiment.

Another object of the invention is to solve the problem, often occurring in known heat pump systems, of an ever continuing cooling of the soil surrounding the ground coil, which is insufficiently regenerated by the heat supplied by the condenser to the ground coil during the cooling operation.

The invention provides a solution to this problem by connecting a solar panel to the ground coil by means of a flow control valve, directing a relatively slight portion of the water flow passing through the ground coil through the solar panel.

Further elaborated embodiments of the heat pump system according to the invention are specified in the other subclaims.

Hereinafter, two embodiments of the heat pump system according to the invention will be further explained with reference to the accompanying drawings. In these drawings:
Figs. 1-3 are schematized views of a first embodiment of the heat pump system in the different operating modes;
Figs. 4-6 are exploded, schematic views of the multiple shut-off valve in different positions, associated with the operating modes according to Figs. 1-3;
Figs. 7-9 are schematized views of a second embodiment of the heat pump system in its different operating modes;
Fig. 10 is an exploded, schematic view of the multiple shut-off valve in said second embodiment; and
Figs. 11-13 show the shut-off valve according to Fig. 10 in three different operating modes according to Figs. 7-9.

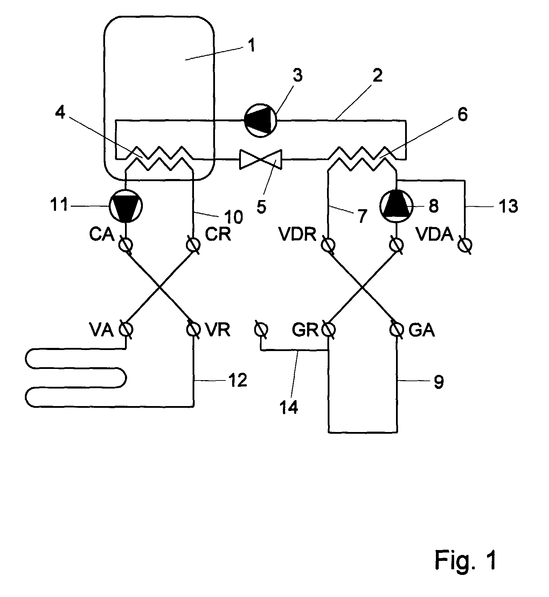

Fig. 1 schematically shows the main parts of the heat pump system, as well as the mutual connections thereof. The system comprises a hot-water boiler 1 and a closed cooling circuit 2, which circuit successively includes a compressor 3, a condenser 4 designed as heat exchanger, an expansion valve 5 and an evaporator 6 likewise designed as heat exchanger. The closed cooling circuit 2 constitutes the primary flow channel of both the condenser 4 and the evaporator 6. As appears from the drawing, the condenser is accommodated in the lower, cold portion of the hot-water boiler 1. The secondary flow channel 7 of the evaporator 6 comprises a supply port VDA and a discharge or return port VDR, while in this secondary flow channel 7, a circulation pump 8 is included. The ports VDA and VDR are connected to the return port GR and supply port GA respectively of the ground coil 9. In a heat pump system for a normal house, this ground coil is a long circulation pipe of some hundreds of meters, buried deep in the ground and serving as heat accumulator.

The secondary flow channel 10 of the condenser 4 designed as heat exchanger has a supply port CA and a return port CR, while in the channel 10, a circulation pump 11 is included. The ports CA, CR are connected to the return port VR and the supply port VA respectively of a heating and cooling coil 12 respectively, fitted in the floor and/or wall of the house.

The operation of the system hitherto described is as follows:

The relatively warm water present in the ground coil 9 is passed by the circulation pump 8 through the secondary flow channel 7 of the evaporator 6, while in the evaporator 6, the necessary evaporation heat is withdrawn from the circuit 7, 9 in order to evaporate the refrigerant circulating in the cooling circuit. In the condenser 4, the gas, pressurized by the compressor 3 and, accordingly, heated to a relatively high temperature, is cooled and brought into a liquid state again, and the condensation heat produced is given off to the water present in the boiler 1 and to the secondary condenser channel 10, to be subsequently pumped by the circulation pump 11 into the floor coil 12 for heating the floor.

As shown in Fig. 1, the port VDA of the evaporator 6 is of double design and both ports are interconnected by means of a bypass 13. The port GR of the ground coil 9 is likewise of double design, both ports GR being interconnected by means of a bypass 14. These double ports VDA and GR with bypasses 13, 14 are necessary for being able to direct the water flows in the different operating modes and in the desired manner through the floor and ground coil 9, 12 via a multiple shut-off valve.

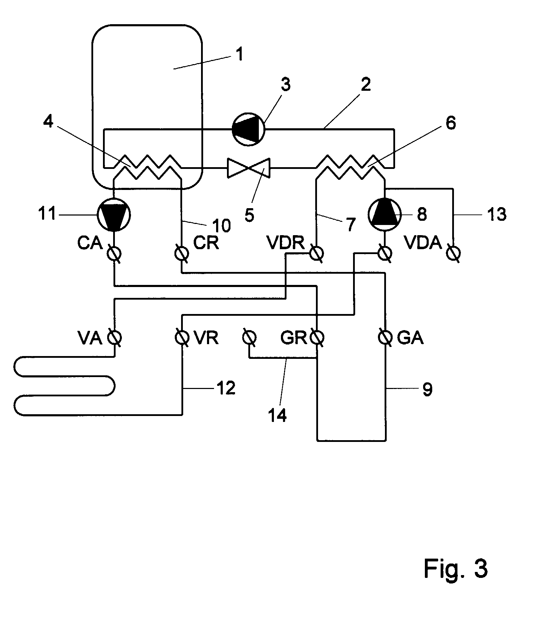

The system according to Fig. 3 differs from that of Fig. 1 merely in that the secondary channel 10 of the condenser 4 is connected, via the ports CA, CR, to the ports GR, GA of the ground coil 9, while the connecting ports of the floor coil VA, VR are connected to the ports VDR, VDA of the secondary flow channel 7 of the evaporator. With the connections as shown in Fig. 3, the heat pump system functions in the operating mode "cooling". The evaporator 6 withdraws the evaporation heat for the refrigerant from the circuit 7, 12, causing the floor coil to be cooled, while the heat delivered to the secondary channel 10 in the condenser 4 is stored in the ground coil 9.

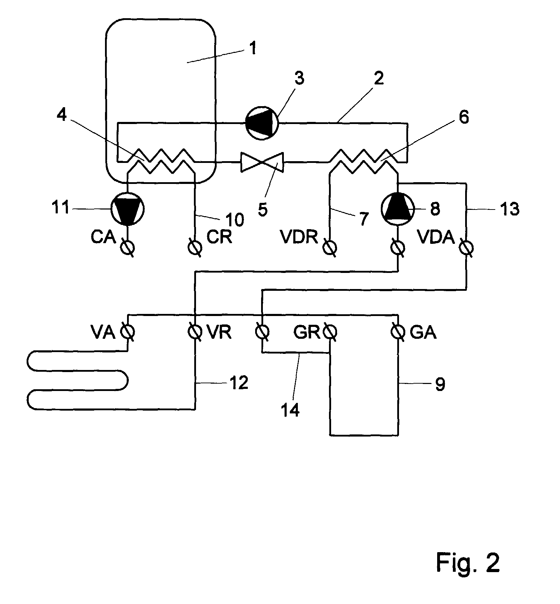

Fig. 2 shows an operating mode referred to as "free cooling". The floor coil 12 and the ground coil 9 are connected in series, the circulation being maintained by the circulation pump 8 of the evaporator, while the flow outside the secondary channel 7 of the evaporator 6 is directed via the bypass 13 connected to the bypass 14 of the ground coil 9. In this operating mode, the evaporator 6 is short-circuited and the closed cooling circuit 2 is not operative, so that the water in the boiler 1 is not heated up. If heating of the boiler water is desired, the system is brought into the operating mode "cooling", with the circulation pump 11 in the secondary flow channel 10 of the condenser 4 optionally being switched off.

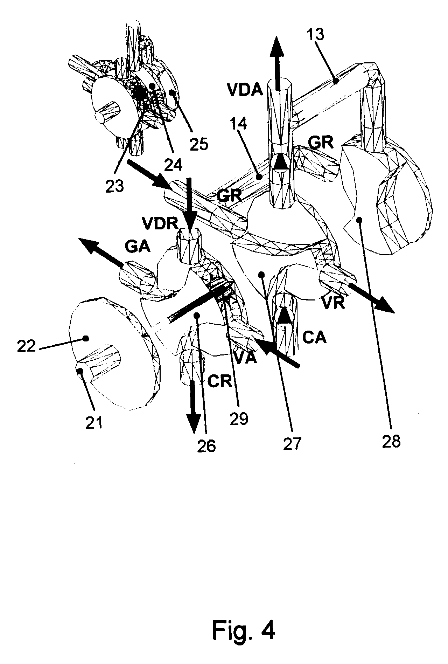

Figs. 4-6 show the multiple shut-off valve by means of which the different ports of the system can be interconnected for causing the heat pump system to operate according to the operating modes shown in Figs. 1-3. The multiple shut-off valve consists of a cylindrical housing, left out in the drawing for clarity's sake. Provided in this housing are ten ports for connecting thereto the ten water-carrying pipes shown in Figs. 1-3, which pipes are designated in Figs. 4-6 by the same letter combinations as in Figs. 1-3. Located within the housing of the multiple shut-off valve is a rotor 20 consisting of a central shaft 21 mounting four circular disks or partitions 22 whose circumference sealingly abuts against the inner wall of the cylindrical housing of the shut-off valve. In this manner, three chambers 23, 24, 25 are formed, each bounded by two adjacent partitions 22 and the inner wall (not shown in the drawing) of the cylindrical housing. In each chamber 23, 24, 25, an hourglass-shaped shut-off body 26, 27, 28 is arranged, sealingly retained between adjacent partitions 22. The radial end walls of these shut-off bodies sealingly abut against the inner wall of the cylindrical housing. The shut-off bodies 26, 27, 28 have radial end walls extending over a circumferential angle of about 45°, with the exception of the rightward-facing end wall of the shut-off body 27 in Fig. 4, whose circumferential angle is approximately half that of the opposite radial end wall of said shut-off body 27. The shut-off bodies 26, 27 assume the same angular position relative to the central shaft 21, while the shut-off body 28 has shifted anti-clockwise over about 45° in rotary direction relative to the shut-off bodies 26, 27.

To the chambers 23, 24, four pipes are connected, extending according to an orthogonal axial cross, while to the chamber 25, the ports of the bypasses 13, 14 connect, enclosing an angle of 90° relative to each other. The shut-off body 26 in chamber 23 is provided with an open channel 29.

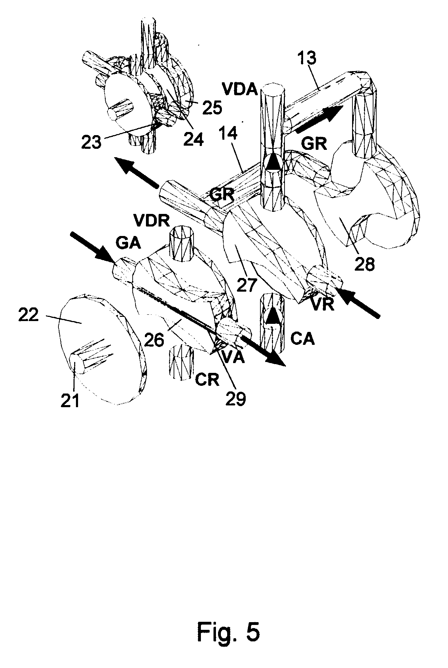

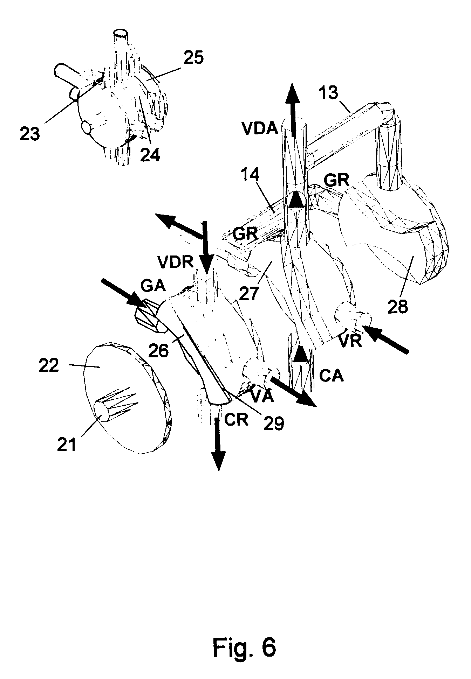

Figs. 4, 5, 6 indicate the three operating positions of the rotor 20 associated with the operating modes as shown in Figs. 1, 2 and 3. By rotating the rotor 20 of Fig. 4 clockwise over 45°, the position according to Fig. 5 is reached, while a further rotation over 45° brings the rotor 20 into the position according to Fig. 6. In Figs. 4-6, the direction of the water flow through the different pipes is indicated.

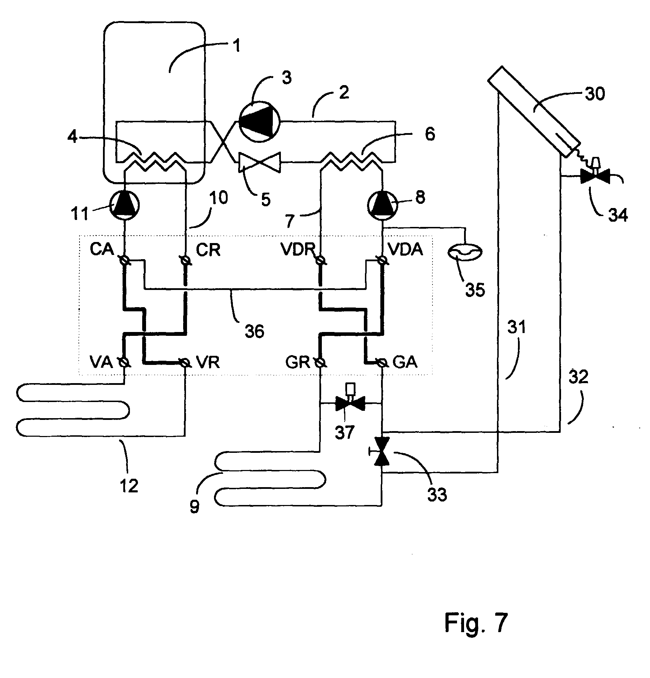

With reference to Figs. 7-13, a second embodiment of the heat pump system according to the invention will be specified. The basic principle, as explained with reference to Fig. 1, has remained the same. Accordingly, the components in Figs. 7-9 that correspond to those in Figs. 1-3 have been designated by the same reference numerals.

In this embodiment, a solar panel 30 provided with a water-carrying coil is connected in parallel to the ground coil 9 via the pipes 31, 32. Between these pipes 31, 32, a flow control valve 33 is arranged in the ground coil 9, which flow control valve directs a small portion - for instance 10 to 20% - of the water flow streaming through the ground coil 9 into the solar panel circuit 31, 32. The solar panel 30 further comprises a draw-off cock 34.

Connected to the secondary flow channel 7 is an expansion tank 35 and a pressure equalization pipe 36 which can be fitted within the multiple shut-off valve - as indicated in Fig. 7 - as well as outside that shut-off valve.

The operation of the system shown in Fig. 7, in the operating mode "heating", is as follows:

The relatively warm water present in the ground coil 9 is passed through the secondary flow channel 7 of the evaporator 6 by the circulation pump 8, while in the evaporator 6, the necessary evaporation heat is withdrawn from the circuit 7, 9 in order to evaporate the refrigerant circulating in the cooling circuit 2. In the condenser 4, the gas, pressurized by the compressor 3 and, accordingly, heated to a relatively high temperature, is cooled and brought into a liquid state again, and the condensation heat produced is given off to the water present in the boiler 1 and to the secondary condenser channel 10, to be subsequently pumped by the circulation pump 11 into the floor coil 12 for heating the floor.

It will be understood that the heat capacity of the water in the ground coil 9 is finite and that the necessary evaporation heat for the cooling medium in the cooling circuit 2 cannot be withdrawn therefrom indefinitely. A part of the required regeneration heat is supplied to the ground coil 9 by the solar panel 30.

By switching the pumps 8, 11 and the compressor 3 on and off respectively, and by controlling the speed of the compressor 3, the operating mode "heating" can be operated according to different regimes.

If the water temperature of both the boiler 1 and the floor coil 12 is below the desired temperature, the compressor 3, with pumps 8 and 11 switched on, is driven at increased speed. The pump 11 can be switched off if the floor coil has reached the desired temperature. The boiler 1 is then heated up further at reduced speed of the compressor 3, which is switched off when the boiler 1 has reached the desired temperature. Usually, the pump 8 remains switched on for keeping the water through the ground coil 9 and the solar panel 30 in circulation.

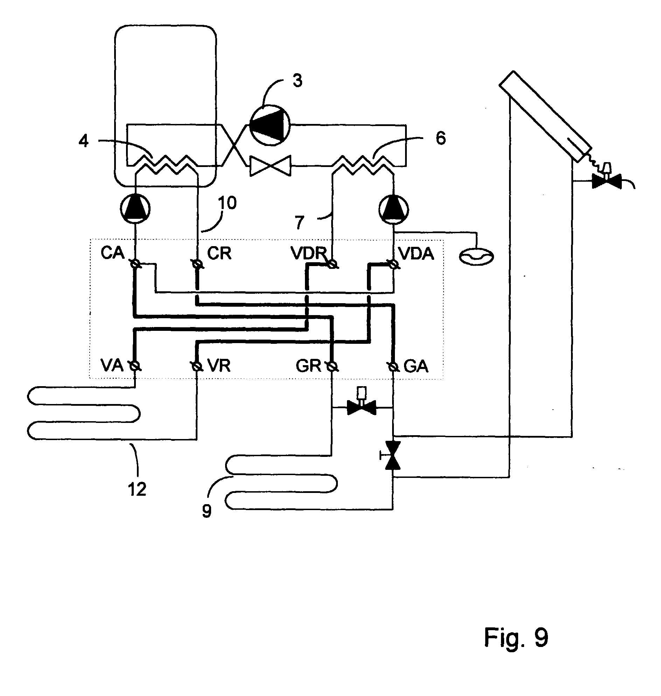

The system according to Fig. 9, in which the operating mode "cooling" is represented, differs from that of Fig. 1 merely in that the position of the multiple shut-off valve has been changed so that the secondary channel 10 of the condenser 4 is connected, via the ports CA, CR, to the ports GR, GA of the ground coil 9, while the connecting ports of the floor coil VA, VR are connected to the ports VDR, VDA of the secondary flow channel 7 of the evaporator. The evaporator 6 withdraws the evaporation heat for the refrigerant from the circuit 7, 12, causing the floor coil 12 to be cooled, while the heat delivered to the secondary channel 10 in the condenser 4 is stored in the ground coil 9. In this operating mode, the pumps 8 and 11 and the compressor 3 are switched on and the water in the ground coil 9 is heated by the condensation heat of the condenser 3.

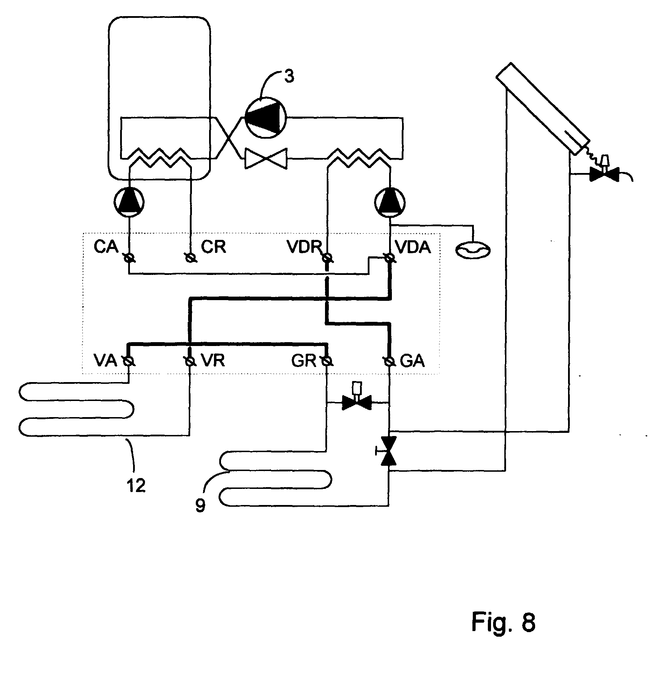

Fig. 8 shows an operating mode referred to as "free cooling". Through rotation of the multiple shut-off valve into the position associated with this operating mode, the floor coil 12 and the ground coil 9 are connected in series, the circulation being maintained by the circulation pump 8 of the evaporator 6. In this operating mode, the compressor 3 is in principle switched off, so that the closed cooling circuit 2 is not operative, unless the water in the boiler 1 has to be heated up. In this operating mode, the control valve 37 provides that the colder ground coil 9 is partly short-circuited to prevent the water temperature in the floor or wall coil to drop below 14°C, at which temperature condensation on the floor or wall may occur.

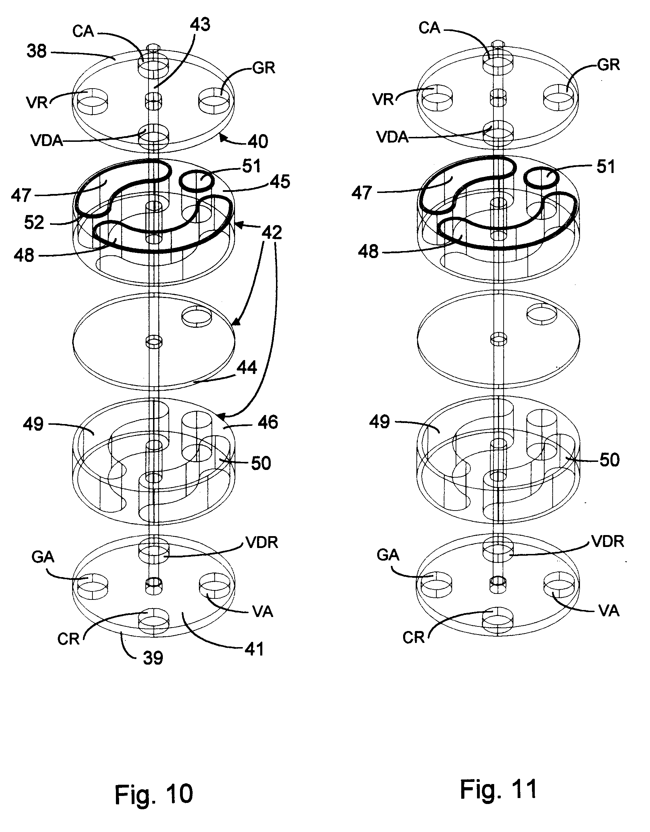

Fig. 10 schematically represents the multiple shut-off valve in the form of an exploded view. Figs. 11-13 show different valve positions of the multiple shut-off valve associated with the different operating modes according to Figs. 7-9.

The multiple shut-off valve 8 comprises two stationary, axial end covers 38, 39, each being provided with four ports for connecting thereto the water-carrying pipes of the heat pump system. The end cover 38 contains the ports CA, GR, VDA and VR, shifted in circumferential direction over 90° relative to each other. The end cover 39 contains the ports VDR, VA, CR and GA, likewise shifted in circumferential direction over 90° relative to each other. The ports of the two covers 38, 39 are concentrically arranged in pairs. The facing end faces 40, 41 of the two end covers 38, 39 are of flat design.

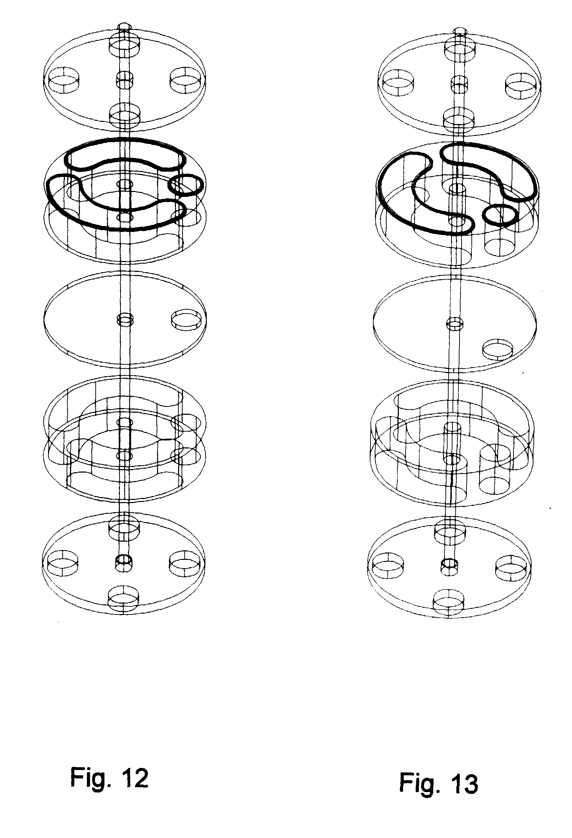

Located between these two end faces 40, 41 is the valve body 42, which is rotatable about a central shaft 43. By a central partition 44, the valve body 42 is divided into two parts 45, 46. Provided in the upper part 45 are two blind, chamber-shaped recesses 47, 48. In section, the chamber 47 has an approximately elliptic shape of such dimensions that two adjacent cover ports, such as for instance the ports CA and VR, can be interconnected (see Fig. 11), while in another position of the valve body 42, only one cover port, such as CA, is connected to the chamber 47 (see Fig. 12). The chamber 48 has an approximately reniform section of such dimensions that in each operating mode of the valve body 42, always two adjacent cover ports - such as GR and VDA - are interconnected via the chamber 48 (see Figs. 11, 12 and 13).

In the lower part 46 of the valve body 42, there are likewise located two blind, chamber-shaped recesses 49, 50, with the chamber 49 located below the chamber 47 having the same sectional shape as the chamber 48, while the chamber 50 has the same sectional shape as the chamber 47 and is located below the chamber 48.

Apart from the chambers 47, 48, 49, 50, the valve body 42 further contains an axially extending open channel 51, which in a particular position of the valve body 42 connects a port in the upper cover 38 directly to a port in the lower cover 39, for instance the port GR to the port VA (see Fig. 12).

Around the mouths of the chambers 47-50 and of the channel 51 in the axial end faces of the valve body 42, shallow grooves are provided, such as the groove 52, represented by a dotted line, around the mouths of the chambers 47, 48, 51, for accommodating therein an O-ring (not shown) which causes these chambers 47-50 or the channel 51 respectively in the mounted or operating condition of the multiple shut-off valve to sealingly abut against the end faces 40, 41 of the end covers 38, 39.

The multiple shut-off valve can be put in three positions I-II-III, enclosing an angle of 45° relative to each other (see Figs. 11-13). The valve position I is associated with the operating mode "heating" as shown in Fig. 7. The ports CA and VR are interconnected by the chamber 47, the ports GR and VDA are interconnected by the chamber 48, the ports GA and VDR are interconnected by the chamber 49, and the ports VA and CR are interconnected by the chamber 50. The channel 51 is not connected to a port.

The valve position II is associated with the operating mode "free cooling" (Fig. 8). The interconnection of the different ports is shown in Fig. 12. The channel 51 connects the ports GR and VA, while the ports CA and CR are not connected to another port.

The valve position III is associated with the operating mode "cooling" (Fig. 9). The interconnection of the different ports is shown in Fig. 13.

## Claims

1. A heat pump system, comprising
- a hot-water boiler (1),
- a closed cooling system (2), consisting of an evaporator (6) designed as heat exchanger, a compressor (3), a condenser (4) designed as heat exchanger, and an expansion valve (5), the condenser (4) being accommodated in the boiler (1),
- a floor coil (12), and
- a ground coil (9),
both the floor coil (12) and the ground coil (9) being connectable to the evaporator (6), the condenser (4) and each other by means of controllable multiple-way valves,
**characterized in that** the controllable multiple-way valves are designed as a single, multiple shut-off valve provided with separate chambers.

2. A heat pump system according to claim 1, characterized in that the multiple shut-off valve comprises a cylindrical housing, provided with a series of ports for connecting thereto the water-carrying pipes of the heat pump system, and a rotor (20) arranged within said housing and consisting of a central shaft (21), a series of circular, spaced-apart partitions (22) fixedly mounted on the central shaft and bounding separate chambers, said partitions sealingly abutting against the inner wall of the cylindrical housing, and hourglass-shaped shut-off bodies (21, 27, 28) arranged between each pair of adjacent partitions (22), of which shut-off bodies the radial end walls sealingly abut against the inner wall of the cylindrical housing and the sidewalls sealingly abut against the adjacent partitions (22).

3. A heat pump system according to claim 2, characterized in that the central shaft (21) of the rotor (20) is connected to a control motor, by means of which the rotor (20) can be placed in three different positions, shifted in circumferential direction over 45° relative to each other.

4. A heat pump system according to claim 2 or 3, characterized in that the multiple shut-off valve comprises three separate chambers (23, 24, 25), two chambers (23, 24) each having four water-carrying pipes (7, 9, 10, 12) connected thereto, shifted over 90° relative to each other, while to the third chamber (25), two mutually perpendicular water-carrying pipes are connected.

5. A heat pump system according to any one of claims 2-4, characterized in that the hourglass-shaped shut-off bodies (26, 27, 28) are formed such and the water-carrying pipes (7, 9, 10, 12) are connected to the housing of the multiple shut-off valve such that in the first position of the rotor (20), associated with the position in which the heat pump system has been switched into the heating operation, the ground coil (9) forms a closed circuit with the heat exchanger of the evaporator (6), while the floor coil (12) forms a closed circuit with the heat exchanger of the condenser (4) (Fig. 1; Fig. 4).

6. A heat pump system according to any one of claims 2-5, characterized in that the hourglass-shaped shut-off bodies (26, 27, 28) are formed such and the water-carrying pipes (7, 9, 10, 12) are connected to the housing of the multiple shut-off valve such that in the second position of the rotor (20), associated with the position in which the heat pump system has been switched into the free cooling operation, the ground coil (9) and the floor coil (12) are connected in series (Fig. 2).

7. A heat pump system according to any one of claims 2-6, characterized in that the hourglass-shaped shut-off bodies (26, 27, 28) are formed such and the water-carrying pipes (7, 9, 10, 12) are connected to the housing of the multiple shut-off valve such that in the third position of the rotor (20), associated with the position in which the heat pump system has been switched into the cooling operation, the ground coil (9) forms a closed circuit with the heat exchanger of the condenser (4), while the floor coil (12) forms a closed circuit with the heat exchanger of the evaporator (6).

8. A heat pump system according to claim 1, characterized in that the water-carrying pipes (7, 9, 10, 12) of the heat pump system are connected to ports (CA, CR, etc.) in two stationary end covers (38, 39) of the multiple shut-off valve, while between said end covers (38, 39), a valve body (42) is present that is rotatable about its center line (43) and is provided with chamber-shaped recesses (47-50) open on one side and sealed relative to the relevant end cover (38 or 39), of which recesses the mouth is located in an axial end face of the rotatable valve body (42) and the shape is such that two adjacent ports are interconnectable via a chamber-shaped recess (47-50).

9. A heat pump system according to claim 8, characterized in that the valve body (42) is further provided with an axially extending, continuous channel (51) which in a specific angular position (II) of the valve body directly connects a port (GR) in one end cover (38) to a port (VA) in the other end cover (39).

10. A heat pump system according to claim 8 or 9, characterized in that the valve body (42) can be put in three different positions (I-II-III) by means of a control motor arranged on the central shaft (43) thereof, said positions being shifted in circumferential direction over 45° relative to each other.

11. A heat pump system according to any one of claims 8-10, characterized in that to each of the end covers (38, 39) of the multiple shut-off valve, four water-carrying pipes (7, 9, 10, 12) are connected, shifted over 90°.

12. A heat pump system according to any one of claims 8-11, characterized in that the water-carrying pipes (7, 9, 10, 12) are connected to the end covers (38, 39) of the multiple shut-off valve such that in the first position (I) of the valve body (42), associated with the position in which the heat pump system has been switched into the heating operation, the ground coil (9) forms a closed circuit with the heat exchanger of the evaporator (6), while the floor coil (12) forms a closed circuit with the heat exchanger of the condenser (4).

13. A heat pump system according to any one of claims 8-12, characterized in that the water-carrying pipes (7, 9, 10, 12) are connected to the end covers (38, 39) of the multiple shut-off valve such that in the second position (II) of the valve body (42), associated with the position in which the heat pump system has been switched into the free cooling operation, the ground coil (9) and the floor coil (12) are connected in series.

14. A heat pump system according to any one of claims 8-13, characterized in that the water-carrying pipes (7, 9, 10, 12) are connected to the end covers (38, 39) of the multiple shut-off valve such that in the third position (III) of the valve body (42), associated with the position in which the heat pump system has been switched into the cooling operation, the ground coil (9) forms a closed circuit with the heat exchanger of the condenser (4), while the floor coil (12) forms a closed circuit with the heat exchanger of the evaporator (6).
